# EUROPEAN PATENT SPECIFICATION

(11) **EP 3 159 634 B1**
(45) Date of publication and mention of the grant of the patent: **13.10.2021**
(21) Application number: 16195167.8
(22) Date of filing: 21.10.2016
(51) Int. Cl.: F25D 21/04

(54) **METHOD OF REGENERATING A HEAT EXCHANGER HYDROPHOBIC COATING**
VERFAHREN ZUR REGENERIERUNG EINER WASSERABWEISENDEN BESCHICHTUNG EINES WÄRMETAUSCHERS
PROCÉDÉ DE RÉGÉNÉRATION D'UN REVÊTEMENT HYDROPHOBE D'ÉCHANGEUR DE CHALEUR

(30) Priority: 23.10.2015 US 201562245477 P
(43) Date of publication of application: 26.04.2017
(73) Proprietor: Carrier Corporation, Farmington, CT 06034-4015 (US)
(72) Inventor: ELSHERBINI, Abdelrahman, East Hartford, CT Connecticut 06108 (US); TULYANI, Sonia, East Hartford, CT Connecticut 06108 (US); RADCLIFF, Thomas D., Vernon, CT Connecticut 06066 (US); ALAHYARI, Abbas A., East Hartford, CT Connecticut 06108 (US)
(74) Representative: Dehns

(56) References cited:
- EP-A1- 2 184 115
- EP-A1- 2 765 385
- DE-U1-202011 109 995
- JP-A- 2006 177 631
- US-A1- 2014 069 620
- US-B2- 7 269 967

## Description

The present disclosure relates to a method for regenerating a hydrophobic coating on a heat exchanger.

Frost accumulation can occur on heat transfer surfaces of heat exchangers such as, for example, evaporators used in refrigeration systems. Frost deposition on heat transfer surfaces may result in several adverse effects such as blockage of fluid flow passages, degradation of heat transfer, increase in pressure drop and fan power, and overall lower energy efficiency. Additionally, heat exchangers are often designed with larger fin spacing and less elaborate enhancement features in order to accommodate frost resulting in suboptimal designs from a heat transfer point of view.

US 2014/069620 discloses a heat exchanger including a heat exchange fin in which frost formation is prevented to the extent possible. EP 2765385 A1 discloses a heat exchanger with a hydrophobic coating according to the preamble of claim 1.

According to a first aspect of the invention, a method of regenerating a hydrophobic coating on a heat exchanger includes exposing the hydrophobic coating to a temperature within a range of about fifty to one-hundred-and-fifty degrees Celsius, wherein the heat exchanger is an evaporator including a plurality of tubes for flowing a first heat transfer fluid, and wherein the temperature is achieved at least in-part by reversing a flow of the first heat transfer fluid through a tube of the heat exchanger and at least in-part by controlling a flow rate of a second heat transfer fluid flowing across a plurality of fins of the heat exchanger coated with the hydrophobic coating.

The hydrophobic coating may comprise a polymer.

The temperature may be within a range of about fifty to one-hundred degrees Celsius.

In the alternative or additionally thereto, the temperature may be achieved at least in-part by controlling a second heat transfer fluid temperature of the second heat transfer fluid flowing across a plurality of fins of the heat exchanger coated with the hydrophobic coating.

In the alternative or additionally thereto, the method may include reorganizing a molecular arrangement of the hydrophobic coating via exposure to the temperature for a period of time.

In the alternative or additionally thereto, the hydrophobic coating may comprise an organic species.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

Various features will become apparent to those skilled in the art from the following detailed description of the disclosed non-limiting embodiments. The drawings that accompany the detailed description can be briefly described as follows:
FIG. 1 is a schematic of a refrigeration system utilizing a first heat exchanger;
FIG. 2 is a perspective view of the heat exchanger;
FIG. 3 is a perspective view of a second heat exchanger;
FIG. 4 is a perspective view of a third heat exchanger;
FIG. 5 is a partial perspective view of a fin of the heat exchanger of FIG. 4;
FIG. 6 is a perspective view of a fourth heat exchanger;
FIG. 7 is a partial perspective view of a fin of the heat exchanger of FIG. 6;
FIG. 8 is a cross section of a tube array of the heat exchanger of FIG. 6;
FIG. 9 is a cross section of the fin of the heat exchanger of FIG. 6;
FIG. 10 is a cross section of an equilateral tube array that may be applied to the first, second and third heat exchangers;
FIG. 11 is a cross section of a fin of the first, second, third and fourth heat exchangers;
FIG. 12 is table illustrating heat exchanger design with and without application of a hydrophobic coating;
FIG. 13 is a chart illustrating a regeneration effect of the hydrophobic coating; and
FIG. 14 is a schematic of the refrigeration system.

The present disclosure relates to the control and/or prevention of frost formation on heat transfer surfaces of heat exchangers. Such heat exchangers may be of the plate-fin type, may be used in air-temperature conditioning systems, and/or may further be evaporators used in refrigeration and/or air conditioning systems. Examples may include refrigeration systems suitable for use in conditioning air to be supplied to a climate controlled comfort zone within a residence, office building, hospital, school, restaurant or other facility. The refrigeration systems may also be employed in refrigerating air supplied to display cases, merchandisers, freezer cabinets, cold rooms or other perishable and frozen product storage areas in commercial establishments. Yet further, the refrigeration systems may be applied and/or an integral part of transport container and/or tractor trailer systems.

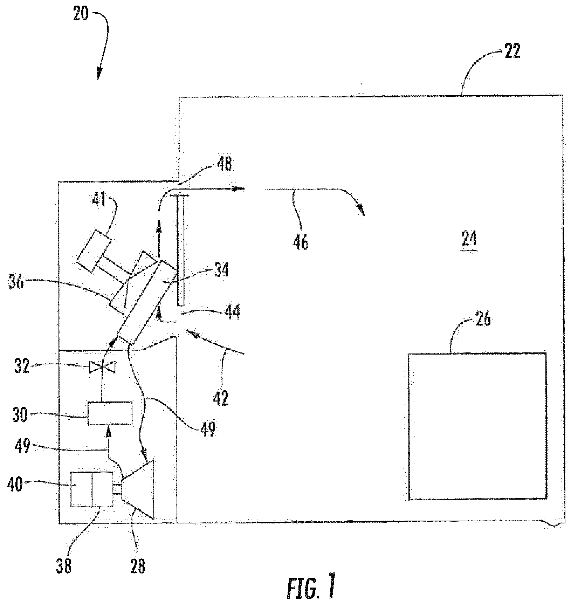

Referring to FIG. 1, an air-temperature conditioning system 20 may be a refrigeration system as one, non-limiting, example. The refrigeration system 20 may generally be integrated into a container 22 that defines a cargo and/or occupiable compartment 24 containing a cargo 26 that may be perishable if not refrigerated. The container 22 may be part of a tractor trailer system, a transport container, an occupied structure, a freezer for cold storage of food, and many others. The cargo 26 may be maintained at a desired temperature by cooling of the compartment 24 via the refrigeration system 20 that circulates fluid flow into and through the compartment 24. The refrigeration system 20 may include a compressor 28, a condenser 30, an expansion valve 32, an evaporator 34, and an evaporator fan 36. The compressor 28 may be powered by an electrical generator 38 driven by an engine system 40. A motor 41, such as a variable speed motor, can be powered by a drive, such as a variable frequency drive, that may drive the fan(s) 36 associated with the evaporator 34. It is further contemplated and understood that the evaporator 34 may be other types of heat exchangers including, for example, air coolers. It is further contemplated that the heat exchanger may not be an evaporator and may be any heat exchanger that carries a subfreezing fluid; for example, a heat exchanger in a secondary loop.

During a normal cooling cycle of the refrigeration system 20, a return fluid flow 42 (e.g., airflow or second heat transfer fluid) flows into the refrigeration system 20 from the compartment 24 through a refrigeration inlet 44, and across the evaporator 34 via the evaporator fan 36, thus cooling the return fluid flow 42. Once cooled, the return fluid flow 42 becomes supply fluid flow 46 and is supplied to the compartment 24 through an outlet 48 of the refrigeration system 20. The boundaries of the inlet 44 and the outlet 48 may be defined by the container 22, with the outlet 48 located above the inlet 44. It is further contemplated and understood that the fluid flow may be any fluid in a gaseous state and capable of forming frost upon a heat exchanger.

Also during a normal cooling cycle, a first heat transfer fluid (e.g., a refrigerant, see arrow 52) flows through a line 49 between the various components. Before entering tubes of the evaporator 34, the first heat transfer fluid 52 can traverse the evaporator expansion valve 32, such as, for example, an electronic expansion valve or a thermostatic expansion valve, and expand to a lower pressure and a lower temperature before entering the evaporator 34 as a gas/liquid two phase mixture. As the first heat transfer fluid 52 traverses the evaporator 34, it passes in heat exchanging relationship with a second heat transfer fluid (e.g., ambient air) whereby the liquid phase of the first heat transfer fluid 52 is vaporized and can be superheated to a desired degree. The low pressure vapor phase first heat transfer fluid 52 leaving the evaporator 34 passes through line 49 to the suction inlet of the compressor 28. It is contemplated and understood that the first heat transfer fluid 52 may be any substance that may be capable of undergoing phase transitions from a liquid to a gas and back again. Such working fluids may include any refrigerant, for example, including fluorocarbons, ammonia, sulfur dioxide, hydrocarbons, carbon dioxide and others.

The second heat transfer fluid or fluid flow 42 may be air drawn by the associated fan(s) 36 from a climate controlled environment, such as a perishable/frozen cargo storage zone associated with a transport refrigeration unit, or a food display or storage area of a commercial establishment, or a building comfort zone associated with an air conditioning system, to be cooled, and generally also dehumidified, and thence returned to a climate controlled environment.

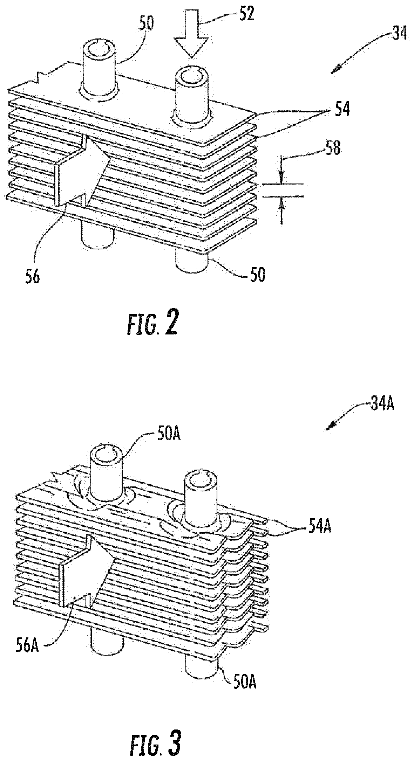

Referring to FIG. 2, the evaporator 34 may be an air-cooling heat exchanger such as, for example, a round tube plate-fin (RTPF) heat exchanger that may have tubes 50 that facilitate the first heat transfer fluid 52 flow and a multitude of substantially flat fins 54 secured to the exterior of the tubes. In operation, a fluid flow (see arrow 56) moves across the fins 54 and heat is transferred from the air, through the fins 54 and into the flowing first heat transfer fluid 52. With the absorption of heat, the first heat transfer fluid 52 may evaporate inside the tubes 50. The evaporator 34 further includes a fin pitch (i.e., fin density) that may be represented by the number of fins per inch (see arrow 58). It is further contemplated and understood that other examples of heat exchangers 34 may include a heat pump evaporator (e.g., heat pump microchannel heat exchanger) that may be located outdoors or a secondary heat exchanger use in a refrigeration system with the coolant 52 being a secondary coolant.

Referring to FIGS. 3-10, other types of evaporators 34 are illustrated and identified with the addition of an alphanumeric suffix as an identifier. As shown in FIG. 3, an RTPF heat exchanger 34A may include fins 54A that are generally wavy.

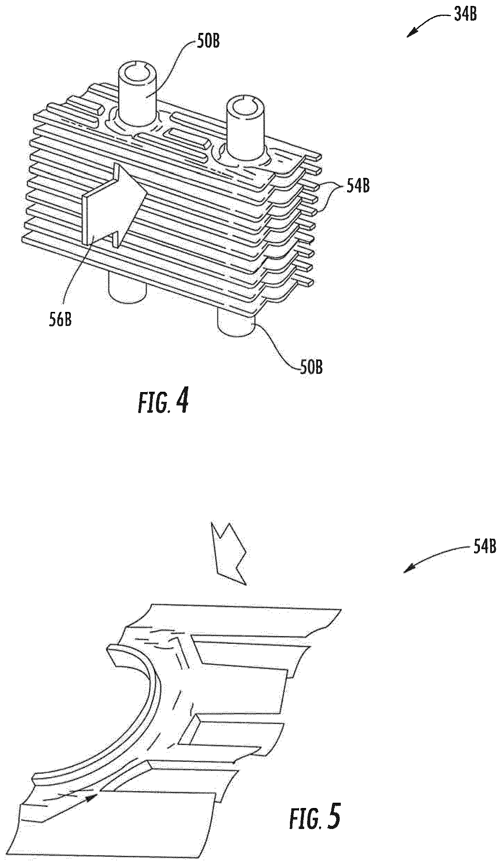

As shown in FIGS. 4 through 5, an RTPF heat exchanger 34B may include fins 54B that are lanced.

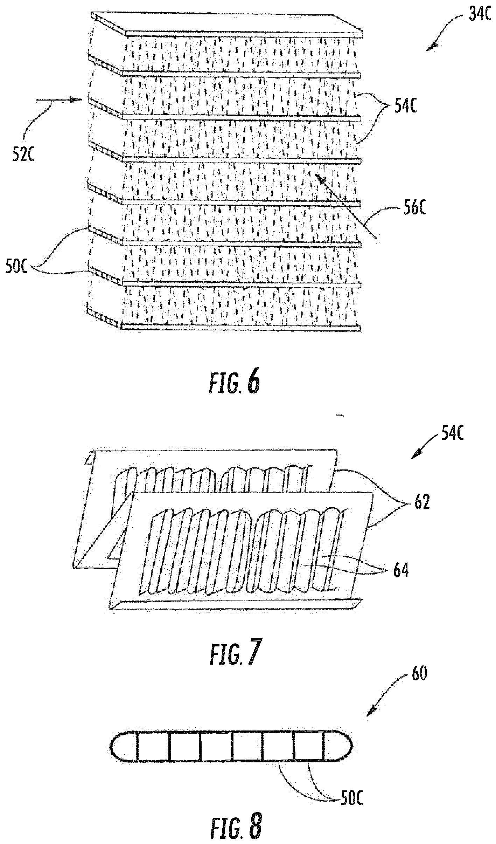

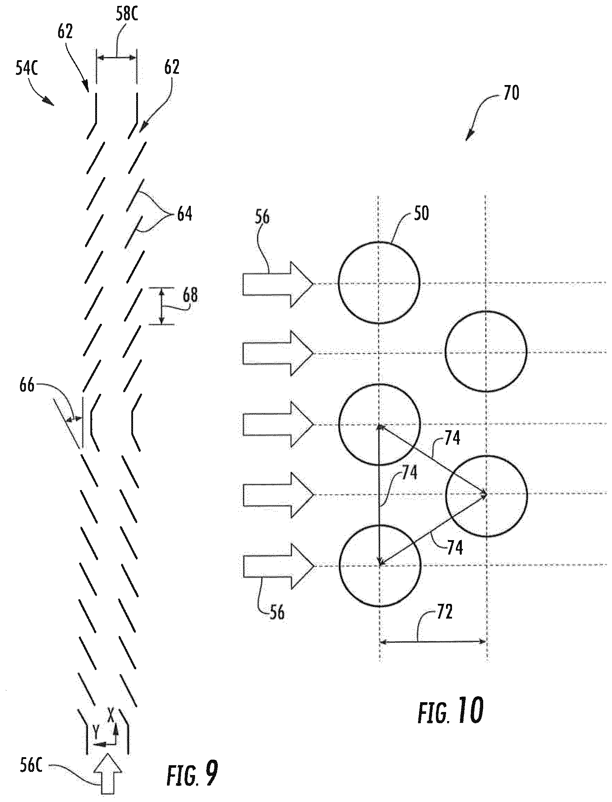

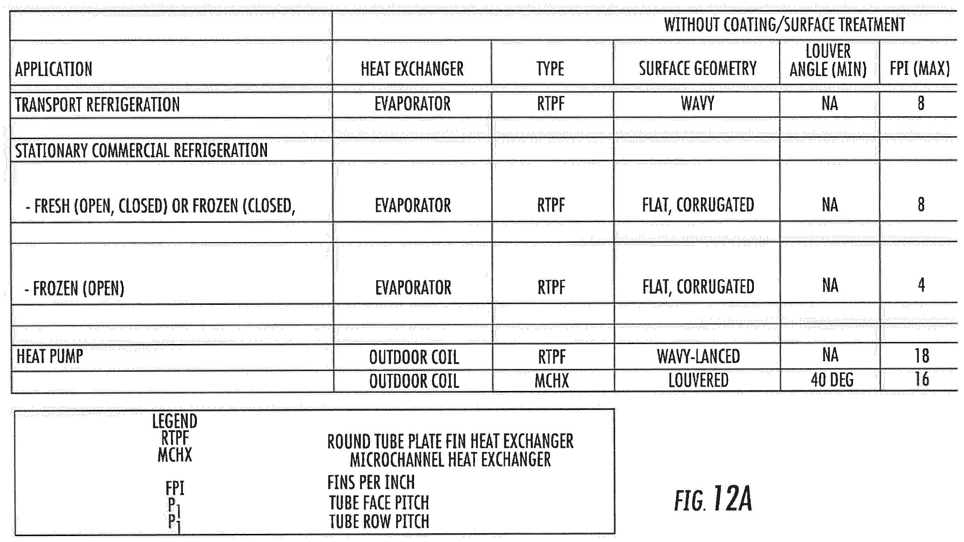

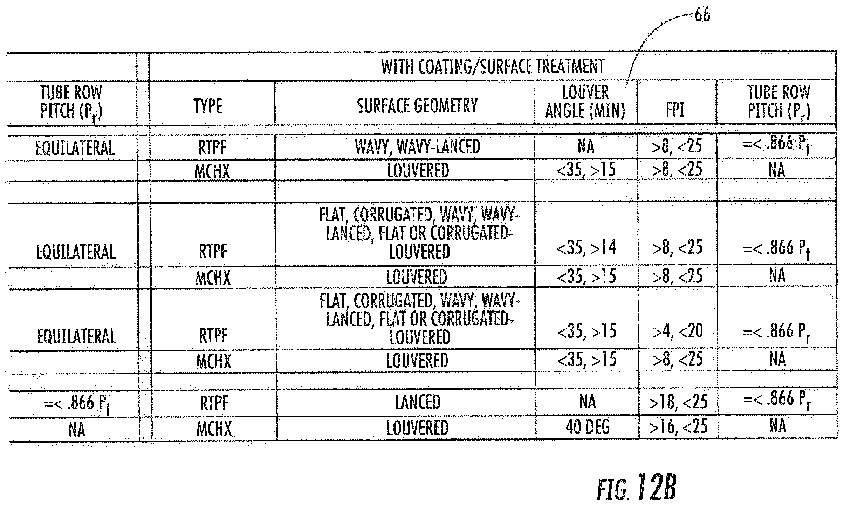

As shown in FIGS. 6 through 9, an evaporator 34C may be a micro-channel heat exchanger (MCHX) including tubes 50C and fins 54C. The tubes 50C may be substantially rectangular in cross section and aligned side-by-side forming a tube array 60. Each fin 54C may include a plurality of corrugations 62 with each corrugation having a plurality of louvers 64. One fin 54C may be located between adjacent tube arrays with each corrugation 62 of the fin 54C extending between and in contact with adjacent tube arrays 60. As best shown in FIG. 9, the evaporator 34C (or other louvered evaporator configuration) may include a fin pitch (see arrow 58C), a louver angle (see arrow 66 in FIG. 9) and a louver pitch (see arrow 68). Preferably, the louver angle 66 is about less than thirty-five (35) degrees (also see FIG. 12).

Referring to FIG. 10, any one or all of the tubes 50, 50A, 50B of the respective evaporators 34, 34A, 34B, may include tubes configured in an equilateral tube array 70. The equilateral tube array 70 may include a tube row pitch (see arrow 72) and substantially equal tube face pitches (see arrows 74). The tube row pitch 72 may be about equal to 0.866 times the tube face pitch 74.

When the evaporator 34 (i.e., same applies for evaporators 34A, 34B, 34C) operates with fin surface temperatures below about thirty-two (32) degrees Fahrenheit (zero degrees Celsius), and the dew point temperature of the fluid flow 56 is above the fin surface temperature, freezing moisture from the air may accumulate on the fins 54 and tubes 50 (i.e., frost). The continued formation and/or build-up of frost will decrease the cooling capacity and efficiency of the evaporator 34. This decrease in efficiency may be caused by an increase in air-side pressure drop that decreases air flow through the evaporator 34, and an increase in heat transfer resistance between the air and the first heat transfer fluid due to the insulating effects of the frost.

The fin pitch 58, and other physical characteristics of the evaporators previously described, may influence the rate of frost formation on the evaporator 34. An increase in frost accumulation results in an increase of air-side pressure drop and a consequential reduction in fluid flow 56 through the evaporator 34. Under ideal circumstances and to optimize evaporator performance, a decrease in fin pitch 58 (i.e. increase in fin density) may be desirable because of the increase in heat transfer surface area of the fins 54. However, such a reduction in fin pitch 58 results in a decrease of fluid flow area available as frost accumulates on the evaporator 34. With a continued decrease in fluid flow area, the evaporator 34 operating capacity will decrease until a defrost cycle of the refrigeration system 20 is required. However, the defrost cycle itself requires energy thus reducing the overall efficiency of the refrigeration system 20.

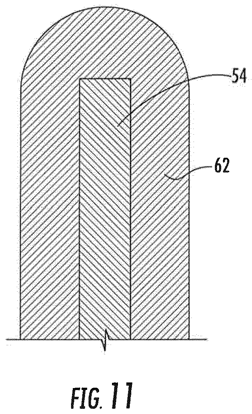

Because of the problems with frost accumulation, refrigeration evaporators are traditionally limited to a fin density of about two (2) to six (6) fins per inch (per about 25 mm), and wavy evaporators 34A, lanced evaporators 34B and louvered evaporators 34C (i.e., corrugated) are generally avoided. The present disclosure; however, utilizes a hydrophobic coating 62 (see FIG. 11) that may cover the exterior surfaces of the fins 54 and tubes (not shown). Condensation droplets that form on the hydrophobic coating 62, as oppose to hydrophilic surfaces or fins with no coating, are smaller and remain in the liquid state longer. Therefore, the hydrophobic coating 62 delays frost accumulation and reduces the frost build-up rate. Moreover, frost that does form on the hydrophobic coating 62 is generally loose and weakly adhered to the surface of the hydrophobic coating when compared to frost formed on hydrophilic and/or uncoated surfaces. One, non-limiting, example of a hydrophobic coating 62 may be an organic coating and may include a polymer.

Referring to FIG. 12, a table is illustrated that exemplifies the ability to optimize heat exchanger design when using the hydrophobic coating 62. For example, evaporators used in transport refrigeration that may be of an RTPF type with a wavy surface geometry and an equilateral tube row pitch have a maximum fin density of eight (8) fins per inch (per about 25 mm) due to the concerns of frost accumulation. However, when using the hydrophobic coating 62, the same evaporator type and geometry may utilize a fin density within a range of about eight (8) to twenty-five (25) fins per inch (per about 25 mm), and preferably greater than ten(10) fins per inch (per about 25 mm). From FIG. 12, it is evident that with the use of the hydrophobic coating 62 evaporator designs can be optimized in ways not previously attempted. For example, the cost and the overall size and weight of the evaporator may be reduced while improving evaporator capacity and efficiency. The air conditioning and/or refrigeration system may exhibit an increase in the coefficient of performance (COP), reduced power consumption, and may provide a more constant load with less cycling. Yet further, with the hydrophobic coating 62, the refrigeration system 20 may not require a defrost cycle or may only require minimal defrost requirements.

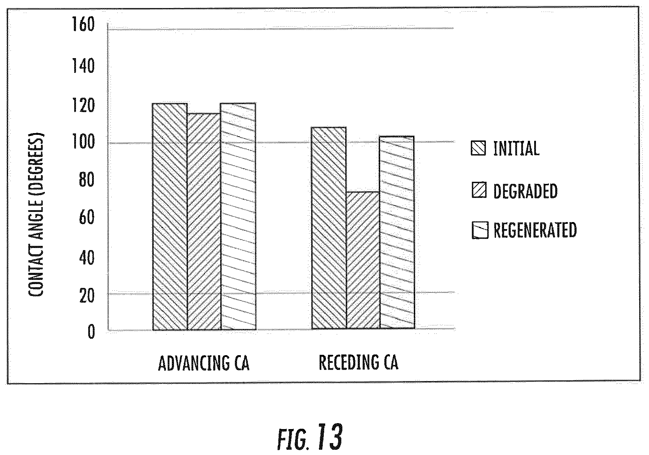

Referring to FIG. 13, the performance of the hydrophobic coating 62 may degrade over time and this may lead to degradation in heat exchanger performance and/or a need to re-apply the coating. For example and with the refrigeration system 20 used in a transport application, the hydrophobic coating 62 may degrade after about two hundred (200) to three hundred (300) cycles. The present disclosure teaches a process of regenerating the coating 62 through exposure to high temperatures. As best shown in FIG. 13, the initial, degraded, and regenerated conditions are expressed in terms of contact angle that may include both advancing and receding contact angles (CA). Although not illustrated, the contact angle is the angle measured through a liquid droplet where a liquid/vapor interface meets an exterior surface carried by, for example, the fin 54. The contact angle denotes the wettability of the exterior surface by a liquid via the Young equation. The higher the contact angle the better is the hydrophobic characteristic of the coating.

The high temperature capable of regenerating the hydrophobic coating 62 may be within a range of about 50 degrees Celsius to 150 degrees Celsius and preferably between 50 degrees Celsius to 100 degrees Celsius, for a period of time (e.g., about thirty to ninety minutes). In the application of the refrigeration system 20 previous described, the system itself may be leveraged to provide the necessary heat to regenerate the hydrophobic coating 62. For example, regeneration may be achieved by allowing the first heat transfer fluid to bypass the condenser 30 (see FIG. 1) and controlling the fan 36 flow. Regeneration is achieved at least in-part by reversing first heat transfer fluid flow (i.e., a reverse cycle) and may be achieved by controlling the fan 36 speed. More specifically, the compressor may be reversed or a four-way valve (not shown) may be added to the system similar to heat pump systems. Similar regeneration techniques may be applied for heat exchangers used in heat pump applications.

Alternatively, the second heat transfer fluid 42 that flows across the plurality of fins of the heat exchanger may be heated to the elevated temperatures necessary to regenerate the hydrophobic coating 62 by a heater or auxiliary heat exchanger (not shown).

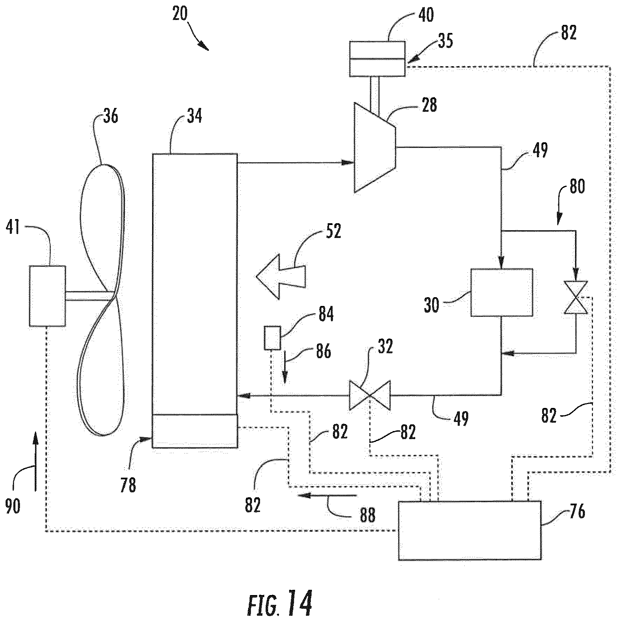

Referring to FIG. 14, refrigeration system 20 may further include a controller 76, an anti-frost device 78 that may be mechanical, a compressor bypass device 80, and a multitude of communication pathways 82. The term "controller" as used herein refers to any method or system for controlling and should be understood to encompass microprocessors, microcontrollers, programmed digital signal processors, integrated circuits, computer hardware, computer software, electrical circuits, application specific integrated circuits, programmable logic devices, programmable gate arrays, programmable array logic, personal computers, chips, and any other combination of discrete analog, digital, or programmable components, or other devices capable of providing processing functions.

The controller 76 may be operatively associated with the compressor 28, the valve 32, the anti-frost device 78, the fan 36, the bypass device 80, various sensors (not shown), various flow control valves (not shown) in the first heat transfer fluid lines 49, and other components. The controller 76 may be configured to control operation of the refrigeration system 20 in various operational modes, including several capacity modes and at least one defrost and/or anti-frost mode. The capacity modes may include a loaded mode wherein a refrigeration load is imposed on the system that requires the compressor 28 to run in a loaded condition to meet the cooling demand. In an unloaded mode of the capacity modes, the cooling demand imposed upon the refrigeration system 20 is so low that sufficient cooling capacity may be generated to meet the cooling demand with the compressor 28 running in an unloaded condition. The controller 76 may also be configured to control the variable speed drive 38 to vary the frequency of electric current delivered to the compressor drive motor 40 so as to vary the speed of the compressor 28 in response to capacity demand. Similarly the controller 76 may control the speed of the fan 36 via the variable speed motor 41.

As previously described, the refrigeration system 20 may also include at least one defrost mode or cycle that may be controlled by the controller 76. As one, non-limiting, example, the controller 76 may initialize the anti-frost device 78 which may be constructed to remove liquid condensate from the evaporator 34 before freezing. Alternatively, the anti-frost device 78 may leverage the loosely attached and/or low density characteristics of accumulated frost built upon the hydrophobic coating 62. The anti-frost device 78 may be a vibrator constructed to vibrate the evaporator 34 thus shaking-off any condensate and/or accumulated, low density, frost. The vibrator 78 may achieve vibrations via a rotating mass, linear resonators, or a piezoelectric apparatus. Alternatively, the anti-frost device 78 may be an acoustic device configured to emit acoustic waves directly upon the condensate and/or frost. It is further contemplate and understood that the rotating mass may be a fan, and the fan may be fan 36.

The anti-frost device 78 may further include a sensor 84 that may be an optical sensor configured to image the evaporator 34 to detect condensate and/or frost. The sensor 84 may send a detection signal (see arrow 86) along a pathway 82, which may be wired or wireless, to the controller 76. Upon a sufficient condensate and/or frost detection, the controller 76 may send an initiation signal (see arrow 88) to the anti-frost device 78 over a pathway 82. It is further contemplated and understood that the sensor 84 may be a pressure differential sensor or other sensors capable of detecting frost accumulation upon a heat exchanger.

Alternatively, in addition to, and/or as part of the anti-frost device 78, the controller 76 may leverage other components of the refrigeration system 20 traditionally intended to solely contribute toward the capacity modes. For example, the defrost mode may include fluid flow 52 pulsation, a sudden increase in fluid flow 52 velocity, and/or acoustic or aerodynamic resonance (i.e., flow induced vibration). More specifically, the optical sensor 84 may detect condensate and/or frost as previously described. The controller 76 may then output a control signal (see arrow 90) to the variable speed motor 41 that generally runs the fan 36 to increase fluid flow velocity and/or pulsate, as one example, previously described. It is further understood and/or contemplated that portions of the evaporator 34 may be blocked to increase fluid flow 52 in other areas. Such blockage may be achieved by another embodiment of the anti-frost device 78 that may mechanically move over segments of the evaporator to block fluid flow thereby increasing fluid flow velocity in other areas.

While the present disclosure is described with reference to exemplary embodiments, it will be understood by those skilled in the art that various changes may be made and equivalents may be substituted without departing from the scope of the invention as defined by the claims. The terms "a" and "an" and "the" herein do not denote a limitation of quantity, and are to be construed to cover both the singular and the plural, unless otherwise indicated herein or clearly contradicted by context. In addition, various modifications may be applied to adapt the teachings of the present disclosure to particular situations, applications, and/or materials, without departing from the essential scope thereof. The present disclosure is thus not limited to the particular examples disclosed herein, but includes all embodiments falling within the scope of the appended claims.

## Claims

1. A method for regenerating a hydrophobic coating (62) on a heat exchanger (34) comprising: exposing the hydrophobic coating (62) to a temperature within a range of about fifty to one-hundred-and-fifty degrees Celsius,
wherein the heat exchanger is an evaporator (34) including a plurality of tubes (50) for flowing a first heat transfer fluid (52); and
wherein the temperature is achieved at least in-part by reversing a flow of the first heat transfer fluid (52) through a tube (50) of the heat exchanger (34), **characterized in that** the temperature is achieved at least in-part by controlling a flow rate of a second heat transfer fluid (56) flowing across a plurality of fins (54) of the heat exchanger coated with the hydrophobic coating (62).

2. The method set forth in claim 1, wherein the hydrophobic coating (62) comprises a polymer.

3. The method set forth in any preceding claim, wherein the temperature is within a range of about fifty to one-hundred degrees Celsius.

4. The method set forth in any preceding claim, wherein the temperature is achieved at least in-part by controlling a second heat transfer fluid temperature of the second heat transfer fluid (56) flowing across a plurality of fins (54) of the heat exchanger (34) coated with the hydrophobic coating (62).

5. The method set forth in any preceding claim, further comprising:
reorganizing a molecular arrangement of the hydrophobic coating (62) via exposure to the temperature for a period of time.

6. The method set forth in any preceding claim, wherein the hydrophobic coating (62) comprises an organic species.

## Patentansprüche

1. Verfahren zum Regenerieren einer wasserabweisenden Beschichtung (62) auf einem Wärmetauscher (34), umfassend: Aussetzen der wasserabweisenden Beschichtung (62) einer Temperatur innerhalb eines Bereichs von ungefähr fünfzig bis einhundertfünfzig Grad Celsius,
wobei der Wärmetauscher ein Verdampfer (34) ist, der eine Vielzahl von Rohren (50) zum Strömen einer ersten Wärmeträgerflüssigkeit (52) einschließt; und
wobei die Temperatur zumindest teilweise durch Umkehren des Stroms der ersten Wärmeträgerflüssigkeit (52) durch ein Rohr (50) des Wärmetauschers (34) erreicht wird, **dadurch gekennzeichnet, dass** die Temperatur zumindest teilweise durch Steuern einer Strömungsgeschwindigkeit einer zweiten Wärmeträgerflüssigkeit (56), die durch eine Vielzahl von Rippen (54) des mit der wasserabweisenden Beschichtung (62) beschichteten Wärmetauschers strömt, erreicht wird.

2. Verfahren nach Anspruch 1, wobei die wasserabweisende Beschichtung (62) ein Polymer umfasst.

3. Verfahren nach einem vorstehenden Anspruch, wobei die Temperatur innerhalb eines Bereichs von ungefähr fünfzig bis einhundert Grad Celsius liegt.

4. Verfahren nach einem vorstehenden Anspruch, wobei die Temperatur zumindest teilweise durch Steuern einer zweiten Wärmeträgerflüssigkeitstemperatur der zweiten Wärmeträgerflüssigkeit (56), die durch eine Vielzahl von Rippen (54) des mit der wasserabweisenden Beschichtung (62) beschichteten Wärmetauschers (34) strömt, erreicht wird.

5. Verfahren nach einem vorstehenden Anspruch, weiter umfassend:
Umstrukturieren einer molekularen Anordnung der wasserabweisenden Beschichtung (62) über Aussetzen einer Temperatur während einer Zeitspanne.

6. Verfahren nach einem vorstehenden Anspruch, wobei die wasserabweisende Beschichtung (62) eine organische Spezies umfasst.

## Revendications

1. Procédé de régénération d'un revêtement hydrophobe (62) sur un échangeur de chaleur (34) comprenant : l'exposition du revêtement hydrophobe (62) à une température dans une plage d'environ cinquante à cent cinquante degrés Celsius,
dans lequel l'échangeur de chaleur est un évaporateur (34) comportant une pluralité de tubes (50) pour l'écoulement d'un premier fluide de transfert de chaleur (52) ; et
dans lequel la température est atteinte au moins en partie par inversion d'un flux du premier fluide de transfert de chaleur (52) à travers un tube (50) de l'échangeur de chaleur (34), **caractérisé en ce que** la température est atteinte au moins en partie par commande d'un débit d'un second fluide de transfert de chaleur (56) s'écoulant à travers une pluralité d'ailettes (54) de l'échangeur de chaleur revêtu avec le revêtement hydrophobe (62).

2. Procédé selon la revendication 1, dans lequel le revêtement hydrophobe (62) comprend un polymère.

3. Procédé selon l'une quelconque des revendications précédentes, dans lequel la température est dans une plage d'environ cinquante à cent degrés Celsius.

4. Procédé selon l'une quelconque des revendications précédentes, dans lequel la température est atteinte au moins en partie par commande d'une seconde température de fluide de transfert de chaleur du second fluide de transfert de chaleur (56) s'écoulant à travers une pluralité d'ailettes (54) de l'échangeur de chaleur (34) revêtu avec le revêtement hydrophobe (62).

5. Procédé selon l'une quelconque des revendications précédentes, comprenant en outre :
la réorganisation d'un agencement moléculaire du revêtement hydrophobe (62) via l'exposition à la température pendant une période de temps.

6. Procédé selon l'une quelconque des revendications précédentes, dans lequel le revêtement hydrophobe (62) comprend une espèce organique.
